# EUROPEAN PATENT APPLICATION

(11) **EP 4 769 046 A1**
(43) Date of publication of application: **01.07.2026**
(21) Application number: 23944869.9
(22) Date of filing: 23.10.2023
(51) Int. Cl.: G05D 1/20, E01H 5/04, B25J 19/04

(54) **CONTACT DETECTOR, SNOW-CLEARING ROBOT AND OBSTACLE AVOIDANCE CONTROL METHOD**

(30) Priority: 13.07.2023 CN 202321846438 U; 13.07.2023 CN 202310863002; 13.07.2023 CN 202321853491 U; 13.07.2023 CN 202321845307 U; 13.07.2023 CN 202321856376 U; 13.07.2023 CN 202321853681 U
(71) Applicant: Shenzhen Hanyang Technology Co., Ltd., Shenzhen, Guangdong 518000 (CN)
(72) Inventor: HUANG, Yang, Shenzhen, Guangdong 518000 (CN); ZHU, Taotao, Shenzhen, Guangdong 518000 (CN); SONG, Yongqi, Shenzhen, Guangdong 518000 (CN); WEI, Hanfeng, Shenzhen, Guangdong 518000 (CN); TIAN, Hang, Shenzhen, Guangdong 518000 (CN); CHEN, Yixuan, Shenzhen, Guangdong 518000 (CN)
(74) Representative: Abel & Imray LLP
(86) International application number: PCT/CN2023/126012
(87) International publication number: WO 2025/010863

(57) **Abstract**

The present application relates to an obstacle avoidance system, a snow-clearing robot and an obstacle avoidance control method. The obstacle avoidance system is applied to a snow-clearing robot. The obstacle avoidance system comprises a contact detection apparatus, a remote sensing detection apparatus and a control apparatus, wherein the remote sensing detection apparatus is arranged on the side of a body that is in the forward direction of a snow-clearing robot; and the control apparatus is arranged on the body, and is used for controlling, according to detection signals from the contact detection apparatus and the remote sensing detection apparatus, the snow-clearing robot to adjust a movement path. The obstacle avoidance system provided in the present application comprises two detection apparatuses, wherein the contact detection apparatus transmits obstacle detection information to the control apparatus by means of physical changes in structures and shapes, which is more direct and specific, and the structure of the body can be protected; and the remote sensing detection apparatus can transmit an obstacle signal to the control apparatus. The two detection apparatuses can enhance the obstacle avoidance capability of the obstacle avoidance system, can adjust the movement path of the snow-clearing robot, and can make the snow-clearing robot continue working, thereby improving the snow removal efficiency.

## Description

### Cross-reference to related applications

This application claims priority to Chinese Patent Application No. CN202321846438.2, filed on July 13, 2023, titled "Anti-collision sensor, snow removal device and snow blower", the contents of which are incorporated herein by reference in their entirety.

This application claims priority to Chinese Patent Application No. CN202310863002.2, filed on July 13, 2023, titled "Anti-collision sensor, device, snow blower and obstacle avoidance control method", the contents of which are incorporated herein by reference in their entirety.

This application claims priority to Chinese Patent Application No. CN202321853491.5, filed on July 13, 2023, titled "Obstacle avoidance system and snow blower", the contents of which are incorporated herein by reference in their entirety.

This application claims priority to Chinese Patent Application No. CN202321845307.2, filed on July 13, 2023, titled "Anti-collision device, snow removal equipment and snow blower", the contents of which are incorporated herein by reference in their entirety.

This application claims priority to Chinese Patent Application No. CN202321856376.3, filed on July 13, 2023, titled "Anti-collision device, snow removal equipment and snow blower", the contents of which are incorporated herein by reference in their entirety.

This application claims priority to Chinese Patent Application No. CN202321853681.7, filed on July 13, 2023, titled "Snow shield board and snow blower", the contents of which are incorporated herein by reference in their entirety.

### Technical field

The present application relates to the technical field of robots, in particular to a contact detector, a snow blower and an obstacle avoidance control method.

### Background

Snow blowers, which are a type of courtyard robot, include a snow sweeping device and self-moving equipment that is used to drag the snow sweeping device around the courtyard. The self-moving equipment is often a wheeled or crawler-type vehicle body. The snow sweeping device mainly includes a snow rolling mechanism and a snow throwing mechanism. The snow rolling mechanism collects snow on the ground into a snow rolling cabin and then throws it in a specified direction through the snow throwing mechanism.

Usually, the motion path needs to be preset for the snow blower in order to realize the automatic snow cleaning function, and follow the preset path while performing snow cleaning work. When obstacles appear on the motion path, snow blower will bypass the obstacles and continue to move using the obstacle avoidance system. The current obstacle avoidance system for snow blowers has a single function and inadequate stability; if it malfunctions, the entire machine would stop working.

### Summary of the invention

The embodiment of the invention provides an obstacle avoidance system, a snow blower and an obstacle avoidance control method.

In the first aspect, the application provides an obstacle avoidance system, which is applied to a snow blower. The snow blower includes a robot body. The obstacle avoidance system includes a contact detection device, a remote sensing detection device and a control device. The contact detection device is adapted to be arranged on the working part of the robot body; the remote sensing detection device is adapted to be arranged at a side of the working part of the robot body facing the forward direction of the snow blower; the remote sensing detection device is used for receiving signals reflected by an obstacle surface to detect the obstacle, and the detection areas the contact detection device and remote sensing detection device are not coincident; the control device is arranged on the robot body, and the control device is used for controlling the snow blower to adjust the motion path according to detection signals of the contact detection device and the remote sensing detection device.

In the second aspect, the application also provides a snow blower, which includes a robot body and an obstacle avoidance system; the robot body is used for clearing snow on the road, and the obstacle avoidance system is provided in the robot body.

In the third aspect, the application also provides an obstacle avoidance control method, which is applied to the snow blower mentioned above. The obstacle avoidance control method includes the following steps: receiving a detection signal, including: receiving a detection signal sent by a sensor; the sensor includes the contact detector, and a plurality of the contact detectors are arranged corresponding to different directions, and the detection signal includes a collision signal sent by the contact detector; reading sensor information, including: reading sensor information corresponding to the contact detector in the detection signal; the sensor information includes identity tags corresponding to the contact detector one to one; and outputting an obstacle avoidance instruction, including: outputting a first obstacle avoidance instruction corresponding to the identity tag according to the identity tag.

In the fourth aspect, the application also provides a snow blower, which includes a robot body, an obstacle avoidance system, one or more processors and a memory. The robot body is used for clearing snow on the road; the obstacle avoidance system is provided in the robot body; one or more programs are stored in a memory and configured to be executed by one or more processors, and one or more programs are configured to perform the above method.

The embodiment of the application provides an obstacle avoidance system, which is applied to a snow blower. The snow blower includes a robot body. The obstacle avoidance system includes a contact detection device, a remote sensing detection device and a control device. The contact detection device is adapted to be arranged on the working part of the robot body. The remote sensing detection device is adapted to be arranged at a side of the working part of the robot body facing the forward direction of the snow blower. The remote sensing detection device is used for receiving signals reflected by an obstacle surface to detect the obstacle, and the detection areas of the contact detection device and remote sensing detection device are not coincident. The control device is arranged on the robot body, and the control device is used for controlling the snow blower to adjust the motion path according to the detection signals of the contact detection device and the remote sensing detection device. The obstacle avoidance system provided by this application includes two detection devices, namely, contact detection device and remote sensing detection device. The contact detection device transmits detection information to the control device according to the change of physical structure and shape of the obstacle. This is more straightforward and specific, and it can protect the robot body's structure. The remote sensing detection device detects obstacles encountered by the robot body in the moving process through transmission media such as signal waves, and can transmit signals to the control device for calculation. It can strengthen the ability of the obstacle avoidance system to detect obstacles encountered by the robot body, adjust the motion path of the snow blower, prevent the snow blower from stopping at the position where obstacles are encountered. This allows the snow blower to continue working, improving the snow blower's intelligence and efficiency.

### Brief description of the drawings

In order to explain the technical solution of the embodiments more clearly, the drawings described in the description of the embodiments of this application will be briefly introduced below. Obviously, the drawings in the present application and their accompanying detailed description are directed to merely exemplary embodiments of the application. For those of ordinary skill in this field, other drawings may be obtained according to these drawings without any creative effort.
Fig. 1 is a structural schematic diagram of a snow blower provided by an embodiment of the present application.
Fig. 2 is a structural schematic diagram showing that the anti-collision frame of the snow blower shown in Fig. 1 is lower than the remote sensing monitoring device.
Fig. 3 is a structural schematic diagram of the support element of the snow blower shown in Fig. 1.
Fig. 4 is a structural schematic diagram of the contact detection device of the snow blower shown in Fig. 1.
Fig. 5 is an exploded view of the anti-collision frame and support element of the snow blower shown in Fig. 1.
Fig. 6 is an exploded view of the anti-collision frame and support element of the snow blower shown in Fig. 1 from another angle.
Fig. 7 is a structural schematic diagram of the alignment groove of the support element of the snow blower shown in Fig. 1.
Fig. 8 is a structural schematic diagram of the buffer chamber of the support element of the snow blower shown in Fig. 1.

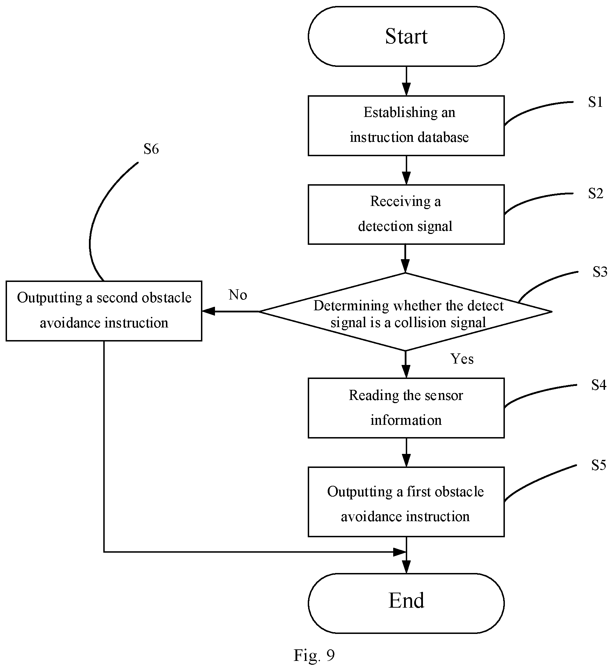

Fig. 9 is a flowchart of an obstacle avoidance control method provided by the present application.

Reference signs in the drawings are as follows.
1000. Snow blower; 100. Robot body; 10. Working part; 200. Obstacle avoidance system; 300. Snow shield; 400. Contact detection device; 500. Remote sensing monitoring device; 600. Contact detector; 610. Support element; 611. Static support part; 6111. Alignment groove; 612. Dynamic support part; 613. Elastic reset part; 614. Deformation space; 615. Buffer chamber; 616. Connecting part; 617. Auxiliary groove; 6171. First extension surface; 6172. Second extension surface; 618. Second matching part; 6181. Clamping protrusion; 620. Static contact assembly; 621. Static contact conductor; 622. Static contact package; 630. Dynamic contact assembly; 631. Dynamic contact conductor; 632. Dynamic contact package; 640. Anti-collision frame; 641. Anti-collision main body part; 642. Anti-collision extension part; 643. First matching part; 6431. Clamping groove; 650. Extension frame; 651. Installation position; 660. Junction box; 661. Wire through-hole; 670. Wire organizer.

### Detailed description of the embodiments

In order to provide a better understanding for those skilled in the art, the technical solutions in the embodiments of the present application will be clearly and completely described below with reference to the drawings in the embodiments of this application. Obviously, the described embodiments are merely part of the embodiments of this application, not all of them. Based on the embodiments in this application, all other embodiments obtained by those of ordinary skill in the art without creative effort belong to the protection scope of this application.

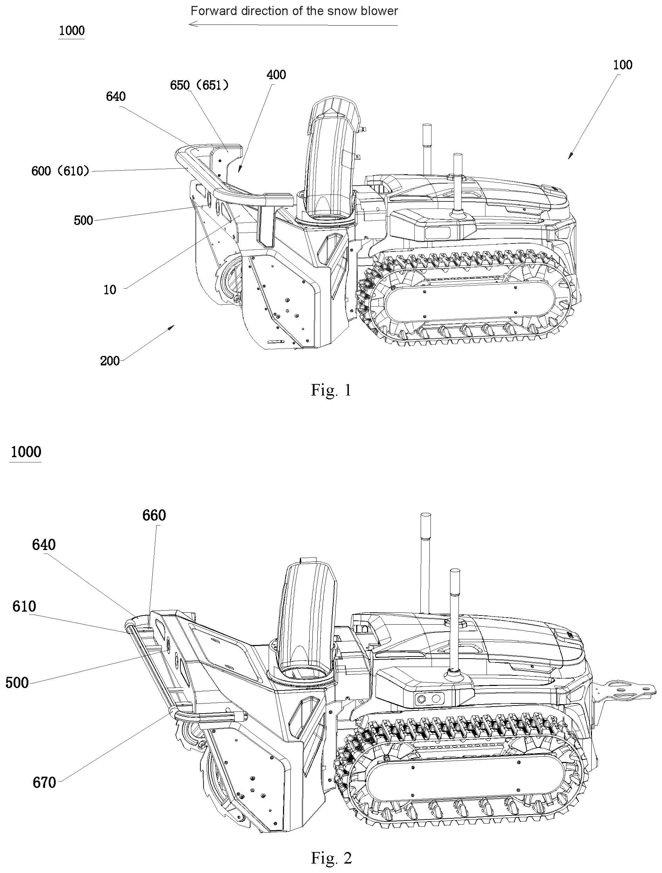

Figure 1 depicts a snow blower 1000 disclosed in this application, which includes a robot body 100 and self-moving device for dragging the robot body 100 to move. The robot body 100 includes a working part 10, which is used to clear snow on the ground and throw it far away to avoid disrupting the road. The self-moving device is used to drive the robot body 100 to move, such as forward, backward, and turn. The self-moving device may be a crawler or wheel structure, and this embodiment does not specifically limit this. In this embodiment, the robot body 100 is integrated with the obstacle avoidance system 200, which can adjust the motion path of the snow blower 1000 based on signals reflected by obstacles (such as light signals and radar echo signals) to keep the robot body 100 from colliding with them.

Figures 1 and 2 depict the obstacle avoidance system 200 in this embodiment, which includes a contact detection device 400, a remote sensing detection device 500, and a control device. The control device can be electrically connected with the contact detection device 400 and the remote sensing detection device 500 to realize signal transmission. The remote sensing detection device 500 is arranged at a side or multiple side surfaces of the working part 10 of the robot body 100. For example, it can be arranged at the side of the working part 10 facing the forward direction of the snow blower 1000 for detecting obstacles. The remote sensing detection device 500 includes at least one signal receiver for receiving signals reflected by the obstacle surface. The remote sensing detection device 500 can detect the obstacles encountered by the robot body 100 in the moving process through transmission media such as signal waves, and can transmit the signals to the control device for calculation. The contact detection device 400 is connected to the robot body 100 through a mechanical structure. The contact detection device 400 transmits detection information to the control device according to the change of physical structure and shape of the obstacle, which is more straightforward and specific.

Please refer to Figures 1 and 2. In this embodiment, the robot body 100 is provided with both a contact detection device 400 and a remote sensing detection device 500 to detect obstacles together, and the positions of the contact detection device 400 and the remote sensing detection device 500 are adaptively adjusted so that both can effectively detect obstacles.

Specifically, this embodiment has an anti-collision frame 640 structure, and the anti-collision frame 640 is connected to the robot body 100. That is, the working part 10 and anti-collision frame 640 extend in the forward direction of the snow blower 1000 relative to the robot body 100. In the forward direction of the snow blower 1000, the anti-collision frame 640 is positioned in front of the robot body 100. When encountering obstacles, the anti-collision frame 640 can collide with obstacles before the robot body 100, which can reduce the impact of obstacles on the robot body 100 and protect the structure of the robot body 100. It can be further understood that the contact detection device 400 and the remote sensing detection device 500 may be arranged at intervals in the forward direction of the snow blower 1000, and the contact detection device 400 is positioned at the front side of the remote sensing device 500.

Referring to Fig. 1, the contact detection device 400 and the signal receiving path of the signal receiver of the remote sensing detection device 500 are designed in a staggered manner. That is, the anti-collision frame 640 in the contact detection device 400 and the signal receiving path of the signal receiver of the remote sensing detection device 500 are designed in a staggered manner. This ensures the accuracy of the signal detected by the remote sensing detection device 500. As an example, in the vertical direction, the height of the anti-collision frame 640 of the contact detection device 400 in this embodiment is higher than the remote sensing detection device 500. It can be considered that the anti-collision frame 640, i.e., the contact detection device 400, is arranged above the remote sensing detection device 500. Specifically, the snow blower 1000 is projected along the forward direction of the snow blower 1000, and the projection profile of the anti-collision frame 640 is set at intervals from the projection profile of the remote sensing detection device 500. The projection profile of the anti-collision frame 640 is located on the side of the projection profile of the remote sensing detection device 500 that is away from the ground. That is, in the vertical direction, the anti-collision frame 640, i.e., the contact detection device 400, is higher than the remote sensing detection device 500. In this way, the structure such as the anti-collision frame 640 can be prevented from hindering the remote sensing detection device 500 from detecting obstacles on the ground.

Please refer to Fig. 2. In another embodiment, the height of the anti-collision frame 640 is lower than the remote sensing detection device 500. Specifically, the snow blower 1000 is projected along the forward direction of the snow blower 1000, and the projection profile of the anti-collision frame 640 is set at intervals from the projection profile of the remote sensing detection device 500. The projection profile of the anti-collision frame 640 is located on the side of the projection profile of the remote sensing detection device 500 close to the ground. That is, the anti-collision frame 640, i.e., the contact detection device 400 is lower than the remote sensing detection device 500 in the vertical direction. When there is an obstacle on the ground, the contact detection device 400 can detect the obstacle before the remote sensing detection device 500. By setting the distance between the anti-collision frame 640 and the robot body 100, the robot body 100 can keep a safe distance from the obstacle. The structure used for shoveling and throwing snow on the robot body 100 can be protected, and the robot body 100 can have enough moving space to adjust the moving direction of the robot body 100, so as to avoid rubbing against obstacles when the robot body 100 rotates.

Figures 1, 2, and 3 show the contact detection device 400 in this embodiment, which includes a contact detector 600 and an obstacle avoidance contact circuit. The contact detector 600 is arranged on the working part 10 of the robot body 100 for detecting the orientation of obstacles through contact measurement. The contact detector 600 in this embodiment includes a support element 610, a dynamic contact assembly 630 and a static contact assembly 620. The support element 610 is arranged on the working part 10 of the robot body 100. The support element 610 is arranged at the outer periphery of the working part 10. The static contact assembly 620 and dynamic contact assembly 630 are arranged oppositely on the support element 610 at intervals, and both static contact assembly 620 and dynamic contact assembly 630 are conductive structures. The static contact assembly 620 and dynamic contact assembly 630 can achieve conduction, and then the obstacle avoidance contact circuit is switched on. The mechanism by which the static contact assembly 620 and the dynamic contact assembly 630 turn on or off the obstacle avoidance contact circuit is: in the initial state, dynamic contact assembly 630 and static contact assembly 620 are arranged at intervals. The dynamic contact assembly 630 moves in the direction close to the static contact assembly 620 under the external force until it is electrically connected with the static contact assembly 620. After the static contact assembly 620 and the dynamic contact assembly 630 are contacted and conducted, the obstacle avoidance contact circuit is switched on, which can control the self-moving device to adjust the motion path of the snow blower 1000, prevent the snow blower 1000 from stopping at the position where it encounters obstacles, and enable the snow blower 1000 to continue working. When the external force applied to the support element 610 is removed, the dynamic contact assembly 630 moves away from the static contact assembly 620, and the electrical connection with the static contact assembly 620 is cut off. The dynamic contact assembly 630 and the static contact assembly 620 return to the initial state of interval setting, and they are electrically disconnected, thus disconnecting the obstacle avoidance contact circuit.

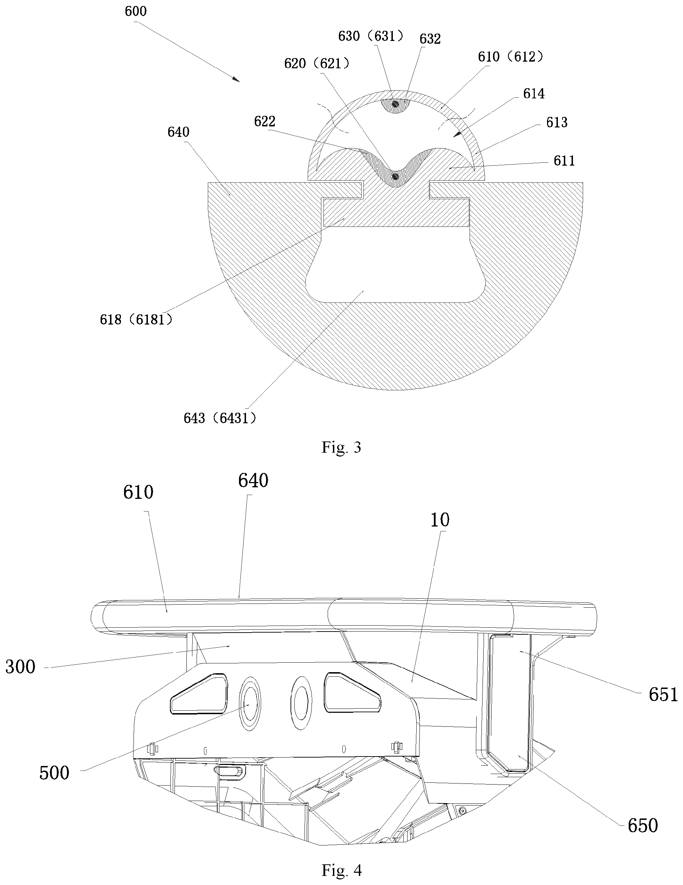

Please refer to Fig. 4, Fig. 5 and Fig. 6. In this embodiment, the support element 610, the dynamic contact assembly 630 and the static contact assembly 620 are all strip structures. The extending direction of the support element 610 intersects with the forward direction of the snow blower 1000, and the support element 610 extends around the outer contour of the working part 10. When the snow blower 1000 moves forward, the support element 610 is basically horizontal. For example, the extension direction of the support element 610 is perpendicular to the forward direction of the snow blower 1000 and extends along the horizontal plane. This allows a relatively large collision detection range for the contact detector 600. The static contact assembly 620 and/or the dynamic contact assembly 630 all extend along the length direction of the support element 610. As an example, in this embodiment, the dynamic contact assembly 630, the static contact assembly 620 and the support element 610 are designed as long flexible pieces, and any point on the support element 610 will be deformed partly when it is collided. Therefore, the static contact assembly 620 and the dynamic contact assembly 630 are in contact and conduction, and then the obstacle avoidance contact circuit is triggered. This arrangement constitutes a continuous line contact detection zone with higher accuracy and eliminates or reduces the detection blind angle. At least one contact detector 600 is arranged on the robot body 100, i.e., the working part 10, which plays a protective role when colliding with obstacles. The contact detector 600 can trigger the obstacle avoidance circuit when contacting with obstacles, thus correcting the trajectory of snow blower 1000, and realizing the obstacle avoidance function of parking or bypassing obstacles. Therefore, the contact detector 600 in this embodiment can not only realize the protective function, but also have the effect of obstacle avoidance.

Referring to Fig. 3, the support element 610 in this embodiment has a tubular structure, and the support element 610 is provided with a deformation space 614. Specifically, the support element 610 includes a static support part 611 and a dynamic support part 612. The dynamic support part 612 is positioned at a side of the static support part 611. The dynamic support part 612 is positioned on the static support part 611 and arranged in parallel and at intervals along the forward direction of the snow blower 1000. The static contact assembly 620 is positioned on the static support part 611, and the dynamic contact assembly 630 is positioned on the dynamic support part 612. The support element 610 includes not only a static support part 611 and a dynamic support part 612, but also an elastic reset part 613 connected between the dynamic support part 612 and the static support part 611. At least one of the dynamic support part 612 and the elastic reset part 613 has a deformable elastic structure. The static support part 611 and the dynamic support part 612 can restore the initial state of opposite arrangement at interval when the external force is removed. That is, the dynamic contact assembly 630 and the static contact assembly 620 return to the initial state where they are set at intervals, and they are electrically disconnected, thereby disconnecting the obstacle avoidance contact circuit. The dynamic support part 612 is arranged in an arch shape, so that the elastic deformation of the dynamic support part 612 caused by external pressure can generate greater restoring force, and the adoption of such a structure can reduce the requirements on the elastic capacity of the support element 610. It not only meets the requirements of resetting dynamic support part 612 after external force is removed, but also enhances the resetting ability of the equipment structurally, improves the reliability of products, reduces the requirements for production materials, thus reducing production cost.

The dynamic support part 612, static support part 611 and elastic reset part 613 define a deformation space 614 of the support element 610. This arrangement in this embodiment makes the support element 610 in a tubular structure, and makes the contact detector 600 form a relatively closed structure as a whole. It protects the static contact conductor 621 included in the static contact assembly 620 and the dynamic contact conductor 631 included in the dynamic contact assembly 630, reduces the influence of the external environment, lowers the failure rate of the equipment and prolongs the service life. The static contact conductor 621 and the dynamic contact conductor 631 are both conductive material structures, such as metal wires, which are conductive and can withstand structural deformation. In some embodiments, the dynamic support part 612, the static support part and the elastic reset part 613 are integrally formed, which is easy to process and low in production cost.

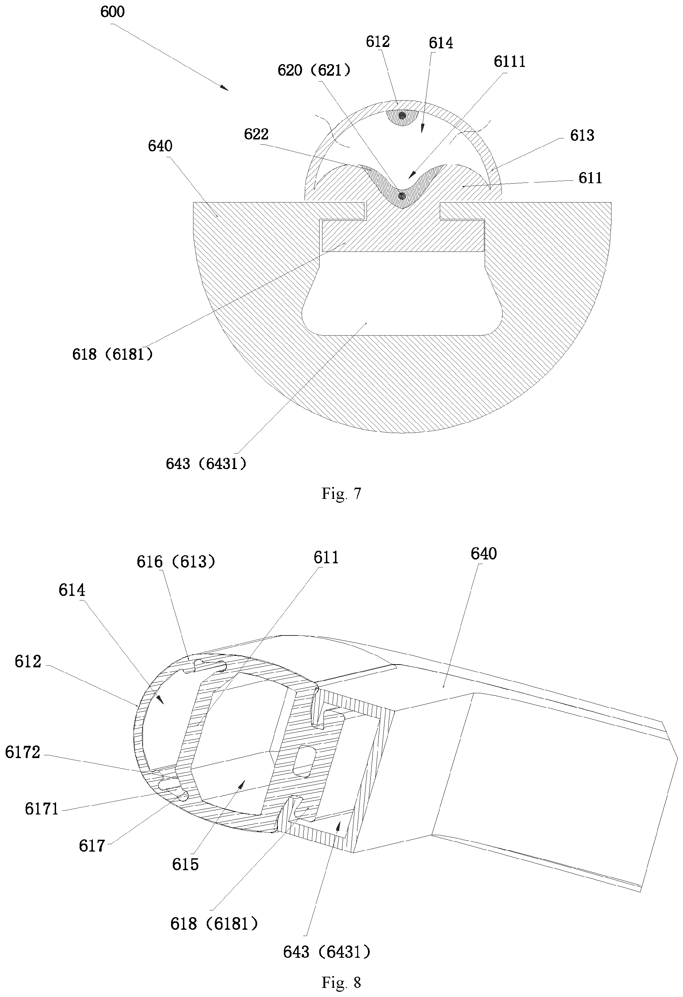

Please refer to Fig. 8. In some embodiments, the static support part 611 also has a deformable elastic structure, and the static support part 611 is provided with a buffer chamber 615. By setting the buffer chamber 615, the human body's pain caused by accidental touch is reduced, and the buffering distance is increased, which provides a longer response time for the obstacle avoidance system 200 to make obstacle avoidance actions, thus improving the obstacle avoidance effect and reducing the equipment damage rate.

According to the foregoing, it can be understood that the dynamic contact conductor 631 approaches and contacts the static contact conductor 621 to form an electrical connection when an external force is applied to the dynamic support part 612. In this embodiment, there are two ways to set the dynamic contact conductor 631 and static contact conductor 621.

Referring to Fig. 3 and Fig. 7, the side of the static support part 611 facing the dynamic support part 612 is provided with an alignment groove 6111. Two sides of the alignment groove 6111 are inclined to the center. The static contact conductor 621 is arranged at the bottom center of the alignment groove 6111. Specifically, two sides of the surface of the static support part 611 extend into the tube to form the alignment groove 6111. The dynamic contact conductor 631 is convexly arranged on the side surface of the dynamic support part 612 facing the static support part 611, and forms a convex structure matching the shape of the cavity of the alignment groove 6111. The dynamic contact conductor 631 and the alignment groove 6111 are arranged oppositely at intervals. Under the action of external force on the dynamic support part 612, the dynamic contact conductor 631 approaches the static contact conductor 621 and is embeded to the alignment groove 6111 to contact the static contact conductor 621 to realize conduction. The arrangement of the alignment groove 6111 will guide the dynamic contact conductor 631 to slide to the bottom of the alignment groove 6111 when the dynamic contact conductor 631 moves to the static contact conductor 621. This can improve the probability that the dynamic contact conductor 631 and the static contact conductor 621 contact and conduct, and ensure the detection effect of the contact detector 600.

Referring to Fig. 3, it can be understood that in order to prevent the dynamic contact conductor 631 and the static contact conductor 621 from falling off the support element 610, the static contact assembly 620 in this embodiment further includes a static contact package 622, which covers a side surface of the static support part 611 facing the dynamic support part 612 and encapsulates the static contact conductor 621. In this embodiment, the dynamic contact assembly 630 further includes a dynamic contact package 632, which covers a side surface of the dynamic support part 612 facing the static support part 611 and encapsulates the dynamic contact conductor 631. Both the static contact package 622 and dynamic contact package 632 are conductive structures. On the one hand, the static contact package 622 and the dynamic contact package 632 can prevent the dynamic contact conductor 632 and the static contact conductor 621 from falling off the support element 610. In this way, the dynamic contact assembly 632 and the static contact assembly 621 are more firmly fixed on the support element 610, thus prolonging the service life of the contact detector 600. On the other hand, the probability of communication between the dynamic contact conductor 631 and the static contact conductor 621 can be improved through the conductive static contact package 622 and the dynamic contact package 632, so that the obstacle avoidance contact circuit can be accurately triggered and the obstacle avoidance function of the obstacle avoidance system 200 can be improved. In addition, the alignment groove 6111 also increases the electrical contact area between the static contact package 622 and dynamic contact package 632. It should also be noted that the support element 610 in this embodiment is an insulating structure in order to prevent the obstacle avoidance contact circuit from being switched on by mistake.

In other embodiments, the static contact conductor 621 is embedded in the static support part 611, and the static contact conductor 621 is at least partially positioned at a side surface of the static support part 611 facing the dynamic support part 612. The dynamic contact conductor 631 is embedded in the dynamic support part 612, and the dynamic contact conductor 631 is at least partially positioned at a side surface of the dynamic support part 612 facing the static support part 611. This arrangement can ensure the stability of the connection relationship between the dynamic contact conductor 631 and static contact conductor 621 and the support element 610. The dynamic contact conductor 631 and the static contact conductor 621 are not likely to fall off from the support element 610. In addition, in order to increase the electrical contact area between the dynamic contact assembly 630 and the static contact assembly 620, the static contact assembly 620 in this embodiment also includes a static contact package 622. The static contact package 622 covers a side surface of the static support part 611 facing the dynamic support part 612 and encapsulates the static contact conductor 621.

The dynamic contact assembly 630 also includes a dynamic contact package 632. The dynamic contact package 632 covers a side surface of the dynamic support part 612 facing the static support part 611 and encapsulates the dynamic contact conductor 631. Both the static contact package 622 and dynamic contact package 632 are conductive structures.

Referring to Fig. 7, in some embodiments, the support element 610 further includes a connecting part 616 connected between the dynamic support part 612 and the static support part 611. The connection between the connecting part 616 and the static support part 611 is recessed in a direction away from the dynamic support part 612 and forms an auxiliary groove 617. The auxiliary groove 617 has two opposite groove walls, and the two opposite groove walls of the auxiliary groove 617 are defined as first extension surface 6171 and second extension surface 6172. The dynamic contact package 632 extends to the auxiliary groove 617 and covers the first extension surface 6171. The static contact package 622 extends to the auxiliary groove 617 and covers the second extension surface 6172. The arrangement of the auxiliary groove 617 can improve the sensitivity of the dynamic support part 612, so that the dynamic support part 612 is able to be deformed when it is subjected to a small external force. With the cooperation of the auxiliary groove 617, dynamic contact package 632 and static contact package 622, the obstacle avoidance contact circuit can be triggered by a small external force, and the forward direction of snow blower 1000 can be adjusted when the support element 610 just touches an obstacle, thus improving the obstacle avoidance effect of contact detector 600.

Please refer to Fig. 1, Fig. 2 and Fig. 5. In order to install the support element 610 on the working part 10 of the robot body 100, the contact detector 600 in this embodiment further includes an anti-collision frame 640, which is adapted to be connected to the robot body 100, i.e., the working part 10. The support element 610 is arranged on the anti-collision frame 640. The anti-collision frame 640 and the robot body 100 are arranged at intervals in the horizontal direction and positioned at a side of the robot body 100. The anti-collision frame 640 plays a protective role when colliding with an obstacle, and can support the static support part 611 to avoid the deformation of the static support part 611 and prevent the contact detector 600 from generating an error signal.

Please refer to Fig. 1, Fig. 2 and Fig. 5. As can be seen from the foregoing, the support element 610 in this embodiment has a strip structure, so the anti-collision frame 640 in this embodiment also has a strip structure and surrounds at least part of the peripheral of the robot body 100. Specifically, the anti-collision frame 640 includes an anti-collision main body part 641 and two anti-collision extension parts 642. The two anti-collision extension parts 642 are respectively connected to two ends of the anti-collision main body part 641 in the length direction, and each anti-collision extension part 642 is bent relative to the anti-collision main body part 641 so that the two anti-collision extension parts 642 are arranged oppositely at intervals. The structure of the support element 610 adapts to the arrangement of the anti-collision frame 640, and is located on a side of the anti-collision frame 640 facing away from the working part 10. Both ends of the support element 610 in the length direction extend along the same side, so that the support element 610 is laid on the anti-collision main body part 641 and two anti-collision extension parts 642 in turn.

In order to prevent the support element 610 from falling off the anti-collision frame 640, the contact detector 600 in this embodiment further includes a wire organizer 670. The wire organizer 670 surrounds the periphery of the anti-collision frame 640 and the support element 610 to clamp the anti-collision frame 640 and the support element 610. Assuming that the anti-collision main body part 641 is arranged on the front of the robot body 100, the two anti-collision extension parts 642 are respectively positioned at two sides of the robot body 100 relative to the front of the robot body 100, which can improve the probability that the support element 610 touches an obstacle and improve the detection effect.

Please refer to Fig. 7 and Fig. 8. In this embodiment, the support element 610 and the anti-collision frame 640 can be bonded or connected by a fitting component. In this embodiment, the fitting component includes a first matching part 643 provided on the anti-collision frame 640 and a second matching part 618 provided on the support element 610. The second matching part 618 includes a clamping protrusion 6181 arranged on the side of static support part 611 away from dynamic support part 612. The first matching part 643 includes a clamping groove 6431 arranged on the anti-collision frame 640. The clamping protrusion 6181 is arranged opposite to the clamping groove 6431, and the clamping protrusion 6181 can cooperate with the clamping groove 6431 to realize connection. In this embodiment, the support element 610 and the anti-collision frame 640 are fixedly connected through clamping protrusion 6181 and clamping groove 6431, so that rapid disassembly and assembly can be realized, which is convenient for assembly and maintenance of the contact detector 600. Specifically, the clamping protrusion 6181 is arranged at the bottom of the support element 610, and in this embodiment, the clamping protrusion 6181 and the support element 610 are integrally formed. In other embodiments, the clamping protrusion 6181 and the support element 610 can also be in a split structure, and are fixedly connected into a whole through assembly.

Please refer to Fig. 1, Fig. 4 and Fig. 5. As mentioned above, the anti-collision frame 640 is arranged at a position higher than the remote sensing detection device 500. In order to realize this position setting, the contact detector 600 in this embodiment also includes an extension frame 650 extending in the vertical direction, the extension frame 650 is adapted to be connected to the working part 10 of the robot body 100. The extension frame 650 is used to support the anti-collision frame 640, so that the anti-collision frame 640 avoids the detection path of the remote sensing detection device 500 of the snow blower 1000. Specifically, the top of the extension frame 650 has an installation position 651, and the anti-collision frame 640 is installed on the installation position 651. Because the working environment of snow blower 1000 determines that the obstacles it encounters are usually located on the ground, and its effective detection range is mainly concentrated on the ground in front of the walking path. In this application, by setting extension frame 650, the anti-collision frame 640 and the support element 610, i.e., the contact detection device 400, are arranged above the remote sensing detection device 500. In this way, the detection path of the remote sensing detection device 500 to the ground is prevented from being partially blocked by the anti-collision frame 640 and the support element 610, so that the remote sensing detection device 500 has no blind angle in detecting the ground obstacles, thus improving the obstacle avoidance accuracy. In this embodiment, the extension frame 650 is a hollow structure, in which a channel for wiring the support element 610 is formed, so that the wires can extend between the support element 610 and the robot body 100 and be protected.

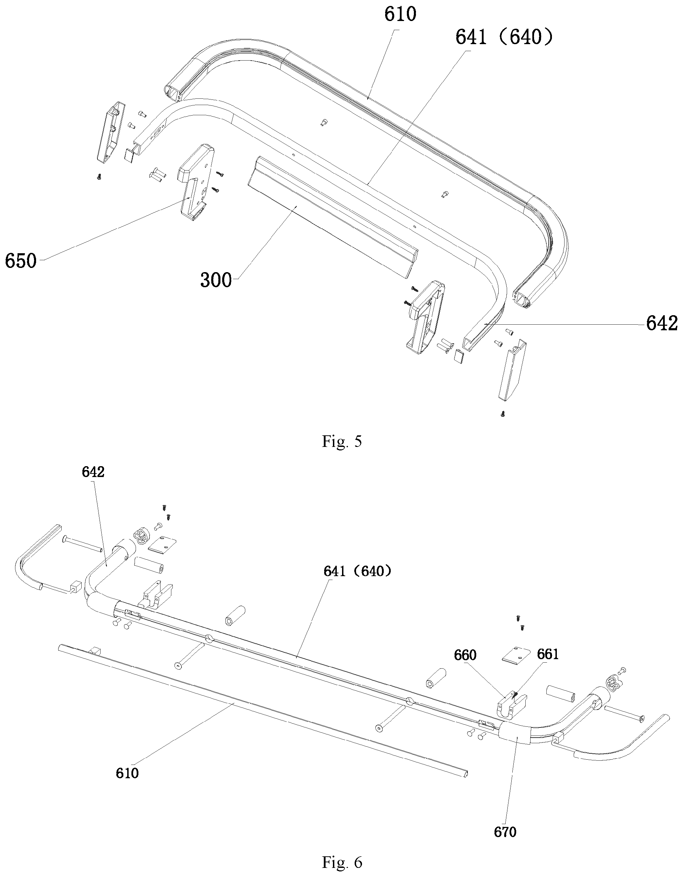

Referring to Fig. 6, further, in order to improve the convenience of the wiring of the snow blower 1000, in addition to the hollow extension frame 650, the contact detector 600 in this embodiment also includes a junction box 660. The junction box 660 is connected between the anti-collision frame 640 and the working part 10 of the robot body 100, and has a wire through-hole 661. The wire through-hole 661 passes through two opposite end faces of the junction box 660, and two ports of the guide through-hole 661 are respectively communicated with the inside of the anti-collision frame 640 and the inside of the robot body 100. In this way, the wires are connected to the static contact conductor 621 and dynamic contact conductor 631 in the support element 610 and the control circuit board inside the robot body 100 without being exposed.

Please refer to Fig. 1. In this embodiment, the anti-collision frame 640 protrudes from the remote sensing detection device 500 in the horizontal direction. Since the remote sensing detection device 500 includes a signal receiver, the signal receiver includes one or more combinations of the following: laser radar, millimeter wave radar, camera and ultrasonic radar. These types of signal receivers are extremely sensitive to external collisions. In this embodiment, the anti-collision frame 640 protrudes from the remote sensing detection device 500 in the horizontal direction. When it collides with an obstacle, the anti-collision frame 640 contacts the obstacle first, which protects the remote sensing detection device 500 and prevents the remote sensing detection device 500 from being damaged due to collision, thus prolonging the service life of the equipment.

To add an example, the remote sensing detection includes millimeter wave radar and camera arranged in working part. To increase safety performance, millimeter wave is employed as a first-level obstacle avoidance detection, camera as a second-level obstacle avoidance detection, and bumper as a third-level obstacle avoidance detection, with the goal of causing as little injury to pedestrians and animals as possible.

In addition, the snow blower 1000 in this embodiment also includes a snow shield 300, which is connected to an anti-collision frame 640. The anti-collision frame 640 is positioned above the remote sensing monitoring device 500, the snow shield 300 is positioned above the remote sensing detection device 500 to reduce the probability of snow sticking to the remote sensing monitoring device 500. Specifically, the snow shield 300 has two opposite sides, one of which is connected to the anti-collision frame 640 and the other is connected to the working part 10 of the robot body 100. In this way, it is prevented that snow seeps down from the gap between the snow shield 300 and the working part 10 to pollute the remote sensing monitoring device 500 or affect the detection function of the remote sensing monitoring device 500. The snow shield 300 is made of perspective material, which allows light to pass through and avoid affecting the lighting effect of the camera. The snow shield 300 can prevent the camera from being damaged by being hit, and it can also shield dust and snow, avoid corrosion caused by lens pollution of the camera, and play a protective effect of being isolated from the outside. In addition, in this embodiment, the snow shield 300 is arranged above the remote sensing detection device 500, so that the structure of the snow shield 300 and the signal receiving path of the remote sensing monitoring device 500 are arranged in a staggered manner, which can prevent the structure of the snow shield 300 from blocking the detection path of the remote sensing detection device 500.

Based on the snow blower mentioned above, this embodiment also provides an obstacle avoidance control method, which is applied to the snow blower mentioned above. The snow blower includes sensors, and the sensors include the contact detectors mentioned above. There are a plurality of contact detectors corresponding to different directions, and the plurality of contact detectors have one-to-one identity tags. The obstacle avoidance control method in this embodiment includes the following steps:
receiving a detection signal, including: receiving a detection signal sent by a sensor, and the sensor includes the contact detector, and a plurality of the contact detectors are arranged corresponding to different directions, and the detection signal includes a collision signal sent by the contact detector;
reading sensor information, including: reading sensor information corresponding to the contact detector in the detection signal, and the sensor information includes identity tags corresponding to the contact detector one to one; and
outputting an obstacle avoidance instruction, including: outputting a first obstacle avoidance instruction corresponding to the identity tag according to the identity tag.

Specifically, in some embodiments, the implementation of the above steps in the obstacle avoidance control method in this embodiment may include the following steps:
S1: establishing an instruction database.

In this embodiment, an instruction database is established in advance, and the instruction database is used to store the first obstacle avoidance instruction associated with the identity tag and the sensor orientation information associated with the identity tag, and the sensor orientation information is used to mark the relative orientation of the corresponding contact detector relative to the snow blower.

By establishing an instruction database, the identity tag is stored in association with the corresponding first obstacle avoidance instruction. By identifying the identity tag in the sensor information, the first obstacle avoidance instruction corresponding to the identity tag in the database is called and output, which can reduce the calculation amount of the system and improve the rapid obstacle avoidance response capability of the equipment.

S2: receiving a detection signal. This step includes: receiving a detection signal sent by a sensor; the sensor includes a contact detector, and the detection signal includes a collision signal sent by the contact detector.

The obstacle avoidance system reads the corresponding identity tag after receiving the detection signal, and outputs the corresponding first obstacle avoidance instruction according to the corresponding identity tag. According to different sensors, different obstacle avoidance instructions are output, so that the fine control of multiple angles can be realized, and more accurate obstacle avoidance actions can be made according to the orientation of obstacles.

S3: determining whether the detect signal is a collision signal.

As an example, the obstacle avoidance system determines that the received detection signal is a collision signal or a remote sensing signal; the collision signal is an electrical signal and the remote sensing signal is an electromagnetic wave signal. Electromagnetic wave signals include millimeter wave signals or light waves, which are used to synthesize obstacle image information. If the detection signal is a collision signal, proceed to step S4, and if the detection signal is a remote sensing signal, proceed to step S5.

In this way, by combining the contact detection device with the remote sensing detection device, when the contact detection device detects an obstacle, it outputs the first obstacle avoidance instruction and executes the obstacle avoidance action corresponding to the first obstacle avoidance instruction. When the remote sensing detection device detects an obstacle, it outputs a second obstacle avoidance instruction and executes an obstacle avoidance action matched with the second obstacle avoidance instruction. As long as one of the two sets of obstacle avoidance systems works normally, it can realize the obstacle avoidance function and increase the reliability of the obstacle avoidance system. The contact detection device is used as an precaution measure to prevent the robot body from being stuck in an obstacle when the signal of the remote sensing detection device is poor or the accuracy is reduced.

S4: reading the sensor information. This step includes: reading the sensor information corresponding to the contact detector in the detection signal; the sensor information includes identity tags corresponding to the contact detector one to one; the identity tag may be a number or model corresponding to the sensors one to one.

S5: outputting a first obstacle avoidance instruction, calling an obstacle avoidance instruction matched with the identity tag in the instruction base according to the identity tag, and controlling a walking system to walk a predetermined distance in a specific direction.

The specific direction is the reverse of the relative orientation of the contact sensor. For example, when the collision avoidance system detects that the direction corresponding to the anti-collision sensor of the collision signal is on the left side of the snow blower, it controls the snow blower to drive a predetermined distance to the right, and then continues to drive around the obstacle. In this way, the obstacle avoidance system can pull a certain distance away from the obstacle by controlling the walking system to walk a predetermined distance in the opposite direction of the relative orientation of the sensor, thus providing an activity space for the action of bypassing the obstacle.

S6: outputting a second obstacle avoidance instruction; the second obstacle avoidance instruction specifically includes: generating a walking path for obstacle avoidance according to the received remote sensing signal, and controlling the snow blower to move along the path. The remote sensing sensor includes but is not limited to millimeter wave radar, camera or infrared sensor.

Aiming at the above obstacle avoidance control method, this embodiment also proposes a snow blower for running the obstacle avoidance control method. The snow blower includes a robot body, an obstacle avoidance system, one or more processors and memory, and the robot body is used to clear snow on the road. The obstacle avoidance system is arranged in robot body. One or more programs are stored in a memory and configured to be executed by one or more processors, and one or more programs are configured to perform an obstacle avoidance control method. In this embodiment, the obstacle avoidance system of snow blower may include all features or any combination of multiple features of the obstacle avoidance system in the above-mentioned embodiments, which will not be repeated here.

In the specification of this application, some terms are used to refer to specific components, such as in the specification and claims. It should be understood by those skilled in the art that hardware manufacturers may use different terms to refer to the same component. The specification and claims do not distinguish components by the difference of names, but by the difference of functions of components. As mentioned in the whole specification and claims, "comprises" is open-ended, so it should be interpreted as "including but not limited to"; "basically" implies that those skilled in the art can solve technical problems within a certain error range and basically achieve technical effects.

In the description of this application, it should be understood that the terms "upper", "lower", "front", "rear", "left", "right" and "inside" indicate that the orientation or positional relationship is based on the orientation or positional relationship depicted in the attached drawings. This is merely provided to make the description easier to understand and does not imply or indicate that the referred device or element must have a specific orientation.

In this application, unless otherwise specified or limited, the terms "installation", "connected with", "connected to" and "fixed" should be understood in a broad sense. For example, they may be fixedly connected, detachably connected or integrally connected, or may be mechanically connected or electrically connected, or may be directly connected or indirectly connected through an intermediate medium. Alternatively, it may be internal communication of two elements, or only in surface contact. For those of ordinary skill in the art, the specific meanings of the above terms in the present application may be understood in specific situations.

The terms "one embodiment", "some embodiments", "examples", "specific examples", or "some examples" in the specification refer to the fact that at least one embodiment or example of the embodiment of this application includes particular features, structures, materials, or characteristics that are described in connection with this embodiment or example. In this specification, the illustrative expressions of the above terms do not necessarily refer to the same embodiment or example. Furthermore, the specific features, structures, materials, or characteristics described may be combined in any one or more embodiments or examples in an appropriate manner. In addition, without contradicting one another, those skilled in the art may combine various embodiments, examples, and features of various embodiments, examples, and examples described in this specification.

Furthermore, the terms "first" and "second" are used for descriptive purposes only and cannot be understood as indicating or implying relative importance or implicitly indicating the number of technical features indicated. Thus, a feature defined by "first" or "second" may explicitly or implicitly includes one or more of the features. For the description of the present invention, the meaning of "plurality" is at least two, such as two, three, etc., unless otherwise specifically defined.

The above embodiments are merely used to illustrate the technical solutions of the present application, rather than limit it. Although the application has been described in detail with reference to the foregoing embodiments, it should be understood by those skilled in the art that it is still possible to modify the technical solutions described in the foregoing embodiments, or equivalently replace some technical features thereof. These modifications or equivalents do not drive the essence of the technical solutions away from the spirit and scope of the technical solutions of the embodiments of the present application.

## Claims

1. An obstacle avoidance system, applied to a snow blower, wherein the snow blower comprises a robot body, and the obstacle avoidance system comprises:
a contact detection device, adapted to be arranged on a working part of the robot body;
a remote sensing detection device, adapted to be arranged at a side of the working part of the robot body facing a forward direction of the snow blower; the remote sensing detection device is used for receiving signals reflected by an obstacle surface to detect the obstacle; detection areas of the contact detection device and the remote sensing detection device do not overlap; and
a control device, arranged on the robot body, the control device is used for controlling the snow blower to adjust a motion path according to detection signals of the contact detection device and the remote sensing detection device .

2. The obstacle avoidance system of claim 1, wherein in the forward direction of the snow blower, it is projected on the snow blower from front to back, and a projection profile of the contact detection device is arranged at intervals from a projection profile of the remote sensing detection device; the projection profile of the contact detection device is located at a side of the projection profile of the remote sensing detection device away from the ground, or the projection profile of the contact detection device does not coincide with a position where the remote sensing detection device is located at the working part.

3. The obstacle avoidance system of claim 1, wherein in the forward direction of the snow blower, it is projected on the snow blower from front to back, and a projection profile of the contact detection device is arranged at intervals from a projection profile of the remote sensing detection device; the projection profile of the contact detection device is located at a side of the projection profile of the remote sensing detection device close to the ground, or the projection profile of the contact detection device does not coincide with a position where the remote sensing detection device is located at the working part.

4. The obstacle avoidance system of any one of claims 1 to 3, wherein the contact detection device and the remote sensing detection device are arranged at intervals in the forward direction of the snow blower.

5. The obstacle avoidance system of any one of claims 1 to 4, wherein the remote sensing detection device comprises at least one signal receiver used for receiving signals reflected by an obstacle surface, the contact detection device and a signal receiving path of the signal receiver are arranged in a staggered manner, and the signal receiver comprises one or more combinations of the following receivers: laser radar, millimeter wave radar, camera, and ultrasonic radar.

6. The obstacle avoidance system according to any one of claims 1 to 2, wherein the contact detection device comprises:
a contact detector, adapted to be connected to the working part of the robot body; and, a contact obstacle avoidance circuit, wherein the contact obstacle avoidance circuit is able to be conducted when the contact detector is subjected to an external force.

7. The obstacle avoidance system of claim 6, wherein the contact detector comprises:
a support element, adapted to be connected to an outside of the working part of the robot body;
a static contact assembly, arranged on the support element; and
a dynamic contact assembly, arranged on the support element, wherein the dynamic contact assembly and the static contact assembly are arranged oppositely at intervals, the dynamic contact assembly is able to get close to the static contact assembly under the action of external force, so as to realize electrical connection with the static contact assembly; when the external force on the support element is removed, the dynamic contact assembly is separated from the static contact assembly, and the electrical connection with the static contact assembly is cut off.

8. The obstacle avoidance system of claim 3, wherein the support element has a strip structure, and the support element extends around an outer contour of the working part in the forward direction of the snow blower; the static contact assembly and/or the dynamic contact assembly both extend along a length direction of the support element.

9. The obstacle avoidance system of claim 7 or 8, wherein the support element comprises a static support part and a dynamic support part, and the dynamic support part is positioned at a side of the static support part; the dynamic support part and the static support part are arranged oppositely at intervals; the static contact assembly is arranged on the static support part, and the dynamic contact assembly is arranged on the dynamic support part.

10. The obstacle avoidance system of claim 9, wherein the dynamic support part has a deformable elastic structure; the support element further comprises an elastic reset part, and the elastic reset part is connected between the dynamic support part and the static support part.

11. The obstacle avoidance system of claim 10, wherein the support element has a tubular structure, and the support element is provided with a flexible hole; the dynamic support part and the static support part are arranged in parallel and at intervals in the forward direction of the snow blower; the elastic reset part is connected between the dynamic support part and the static support part, and the dynamic support part, the static support part and the elastic reset part define the flexible hole.

12. The obstacle avoidance system of any one of claims 9 to 11, wherein the static support part has a deformable elastic structure, and the static support part participates in defining a buffer chamber.

13. The obstacle avoidance system of any one of claims 9 to 12, wherein wherein the static contact assembly comprises a static contact conductor, and the static contact conductor is arranged on the static support part; the dynamic contact assembly is provided with a dynamic contact conductor, and the dynamic contact conductor is arranged on the dynamic support part.

14. The obstacle avoidance system of claim 13, wherein the static contact conductor is convexly arranged at a side surface of the static support part facing the dynamic support part, a side of the static support part facing the dynamic support part is provided with an alignment groove, and the static contact conductor is positioned in the alignment groove; the dynamic contact conductor and the alignment groove are arranged oppositely at intervals, and when the dynamic contact assembly approaches the static contact assembly under the action of external force, the dynamic contact conductor is able to be embedded in the alignment groove.

15. The obstacle avoidance system of claim 13 or 14, wherein the static contact conductor is embedded in the static support part, the static contact conductor is at least partially positioned on a side surface of the static support part facing the dynamic support part; the dynamic contact conductor is embedded in the dynamic support part, and the dynamic contact conductor is at least partially positioned on a side surface of the dynamic support part facing the static support part.

16. The obstacle avoidance system according to any one of claims 13 to 15, wherein the support element has an insulating structure; the static contact assembly further comprises a static contact package, the static contact package covers a side surface of the static support part facing the dynamic support part and encapsulates the static contact conductor, and the static contact package is a conductor; and/or
the dynamic contact assembly further comprises a dynamic contact package, the dynamic contact package covers a side surface of the dynamic support part facing the static support part and encapsulates the dynamic contact conductor, and the dynamic contact package is a conductor.

17. The obstacle avoidance system of claim 16, wherein the support element further comprises a connecting part, the connecting part is connected to the dynamic support part and the static support part, and a joint of the connecting part and the static support part is recessed in a direction away from the dynamic support part and an auxiliary groove is formed; two opposite groove walls of the auxiliary groove are a first extension surface and a second extension surface, the dynamic contact package extends to the auxiliary groove and covers the first extension surface, and the static contact package extends to the auxiliary groove and covers the second extension surface.

18. The obstacle avoidance system according to any one of claims 7 to 17, wherein the contact detector further comprises an anti-collision frame, the anti-collision frame is adapted to be connected to the robot body and surrounds at least part of a periphery of the working part of the robot body, and the support element is arranged on the anti-collision frame.

19. The obstacle avoidance system of claim 18, wherein the anti-collision frame has a strip structure, and an extending direction of the anti-collision frame is perpendicular to the forward direction of the snow blower; the support element extends along a length direction of the anti-collision frame, and the support element is adapted to be installed on a side of the anti-collision frame away from the robot body.

20. The obstacle avoidance system of claim 19, wherein the anti-collision frame comprises an anti-collision main body part and two anti-collision extension parts; the two anti-collision extension parts are respectively connected to two ends of the anti-collision main body part in a length direction, each of the anti-collision extension parts is bent relative to the anti-collision main body part so that the two anti-collision extension parts are arranged oppositely at intervals; the support element is laid on the anti-collision main body part and the two anti-collision extension parts, and is positioned on a side of the anti-collision frame facing away from the working part.

21. The obstacle avoidance system of any one of claims 18 to 20, wherein the anti-collision frame is provided with a first matching part, the support element is provided with a second matching part, and the first matching part is connected with the second matching part.

22. The obstacle avoidance system of claim 21, wherein the anti-collision frame is provided with a first matching part, the support element is provided with a second matching part, and the first matching part is connected with the second matching part; the first matching part comprises a clamping groove, the clamping groove is arranged at a side of the anti-collision frame facing the support element; the second matching part comprises a clamping protrusion, arranged at a side of the support element facing the anti-collision frame, and the clamping groove cooperates with the clamping protrusion .

23. The obstacle avoidance system according to any one of claims 18 to 22, wherein the contact detector further comprises an extension frame extending in a vertical direction, the extension frame is connected to the anti-collision frame and is adapted to be connected to the robot body, and the extension frame is used for supporting the anti-collision frame.

24. The obstacle avoidance system of claim 23, wherein the working part is provided with a remote sensing monitoring device; and
the extension frame is provided with an installation position for installing the anti-collision frame, the installation position and the working part are arranged at intervals in the vertical direction, so that the anti-collision frame is positioned above the working part and the remote sensing monitoring device, this prevents the anti-collision frame from blocking a detection path of the remote sensing detection device .

25. The obstacle avoidance system of claim 23, wherein the extension frame has a hollow structure, in which a channel for wiring the support element is formed.

26. The obstacle avoidance system of any one of claims 18 to 25, wherein the contact detector further comprises a junction box, the junction box is connected between the anti-collision frame and the robot body, and has a wire through-hole, the wire through-hole passes through two opposite end faces of the junction box, and two ports of the wire through-hole are respectively communicated with the inside of the anti-collision frame and the inside of the robot body.

27. The obstacle avoidance system of any one of claims 18 to 26, wherein the contact detector further comprises a wire organizer, and the wire organizer surrounds the periphery of the anti-collision frame and the support element.

28. A snow blower, comprising:
a robot body, used for clearing snow on the road; and
the obstacle avoidance system according to any one of claims 1 to 27, wherein the obstacle avoidance system is arranged on the robot body.

29. The snow blower of claim 28, wherein the remote sensing detection device is arranged on the working part of the robot body;
the snow blower further comprises a snow shield, the snow shield is connected to the anti-collision frame of the snow blower, and the anti-collision frame is positioned above the remote sensing monitoring device, so that the snow shield is positioned above the remote sensing monitoring device.

30. The snow blower of claim 29, wherein the snow shield has two opposite side parts, one of the side parts is connected to the anti-collision frame, and the other side part is connected to the working part.

31. The snow blower of claim 29, wherein the snow shield is of a perspective structure.

32. The snow blower of claim 29, wherein the snow shield and a signal receiving path of the remote sensing detection device are arranged in a staggered manner.

33. An obstacle avoidance control method, applied to the snow blower of claim 14, comprising:
receiving a detection signal, comprising: receiving a detection signal sent by a sensor, wherein the sensor comprises the contact detector, and a plurality of the contact detectors are arranged corresponding to different directions, and the detection signal comprises a collision signal sent by the contact detector;
reading sensor information, comprising: reading sensor information corresponding to the contact detector in the detection signal, wherein the sensor information comprises identity tags corresponding to the contact detector one to one; and
outputting an obstacle avoidance instruction, comprising: outputting a first obstacle avoidance instruction corresponding to the identity tag according to the identity tag.

34. The obstacle avoidance control method of claim 33, wherein the sensor further comprises a remote sensing detection device, the remote sensing detection device comprises a signal receiver used for receiving signals reflected by an obstacle surface, and the detection signal further comprises a remote sensing signal sent by the remote sensing detection device;
before reading the sensor information, the method further comprises: reading the detection signal and determining the signal type of the detection signal, and outputting different instructions according to the signal type;
the outputting the obstacle avoidance instruction further comprises:
when the detection signal is determined, according to the signal type, to comprise the remote sensing signal, outputting a second obstacle avoidance instruction corresponding to the remote sensing signal.

35. The obstacle avoidance control method of claim 34, wherein the remote sensing signal comprises a signal reflected by the obstacle surface and received, and the signal comprises a millimeter wave or a light wave for synthesizing image information.

36. The obstacle avoidance control method of claim 34 or 35, wherein before receiving the detection signal, the method comprises:
establishing an instruction database, wherein the instruction database is used for storing the first obstacle avoidance instruction associated with the identity tag, and sensor orientation information associated with the identity tag, and the sensor orientation information is used for marking the relative orientation of the corresponding contact detector.

37. The obstacle avoidance control method of claim 36, wherein the snow blower further comprises a walking system arranged on the robot body, and the first obstacle avoidance instruction comprises: controlling the walking system to walk a predetermined distance in a specific direction, the specific direction being opposite to the relative orientation.

38. A snow blower, comprising:
a robot body, used for clearing snow on the road;
an obstacle avoidance system, arranged on the robot body; and
one or more processors and a memory,
wherein one or more programs are stored in the memory and configured to be executed by the one or more processors, and the one or more programs are configured to perform the method of any one of claims 33 to 37.
